# EUROPÄISCHE PATENTANMELDUNG

(11) **EP 3 739 822 A1**
(43) Veröffentlichungstag der Anmeldung: **18.11.2020**
(21) Anmeldenummer: 19174899.5
(22) Anmeldetag: 16.05.2019
(51) Int. Cl.: H04L 12/46, H04L 12/40, G08B 25/08, H04L 12/24, H04L 12/413, H04L 12/437, G08B 17/00

(54) **KOPPELN EINES KOMMUNIKATIONSNETZWERKS MIT EINEM KOMMUNIKATIONSENDGERÄT**

(71) Anmelder: Siemens Aktiengesellschaft, 80333 München (DE)
(72) Erfinder: Zirkler, Andreas, 81735 München (DE); Gemsch, Leopold, 6423 Seewen (CH); Mettler, Ivan, 6423 Seewen (CH)

(57) **Zusammenfassung**

Die Erfindung betrifft eine Kopplungseinrichtung (12) für ein Kommunikationsnetzwerk (10), mit
- einem ersten Anschluss (14) zum Anschließen an einen ersten Netzwerkzweig (20) des Kommunikationsnetzwerks (10),
- einem zweiten Anschluss (16) zum Anschließen an ein mit einem zweiten Netzwerkzweig (22) des Kommunikationsnetzwerkes (10) und einem Kommunikationsendgerät (24) kommunikationstechnisch koppelbaren Netzwerkgerät (26),
gekennzeichnet durch
- einen dritten Anschluss (18) zum unmittelbaren Anschließen an das Kommunikationsendgerät (24),
- wobei die Kopplungseinrichtung (12) ausgebildet ist, in einem ersten Betriebszustand eine kommunikationstechnische Kopplung zwischen dem ersten und dem zweiten Anschluss (14, 16) und in einem zweiten Betriebszustand eine kommunikationstechnische Kopplung zwischen dem ersten und dem dritten Anschluss (14, 18) herzustellen.

## Beschreibung

Die Erfindung betrifft eine Kopplungseinrichtung für ein Kommunikationsnetzwerk, mit einem ersten Anschluss zum Anschließen an einen ersten Netzwerkzweig des Kommunikationsnetzwerks, einen zweiten Anschluss zum Anschließen an ein mit einem zweiten Netzwerkzweig des Kommunikationsnetzwerkes und einem Kommunikationsendgerät kommunikationstechnisch koppelbaren Netzwerkgerät, welches Netzwerkgerät zum kommunikationstechnischen Koppeln des zweiten Anschlusses, des zweiten Netzwerkzweigs und des Kommunikationsendgeräts dient. Die Erfindung betrifft ferner ein Kommunikationsnetzwerk mit einem ersten Netzwerkzweig, einem zweiten Netzwerkzweig, wenigstens einem mit einem Kommunikationsendgerät kommunikationstechnisch koppelbaren und mit dem ersten und dem zweiten Netzwerkzweig kommunikationstechnisch gekoppelten Netzwerkgerät, welches Netzwerkgerät zum kommunikationstechnischen Koppeln des ersten und des zweiten Netzwerkzweigs und des Kommunikationsendgeräts dient. Schließlich betrifft die Erfindung auch ein Kommunikationsendgerät zum Anschließen an ein mit einem Kommunikationsnetzwerk kommunikationstechnisch koppelbaren Netzwerkgerät, welches Netzwerkgerät zum kommunikationstechnischen Koppeln des Kommunikationsnetzwerks und des Kommunikationsendgeräts dient, mit einem Netzwerkgeräteanschluss zum Anschließen an das Netzwerkgerät, einer ersten Verarbeitungseinheit und einer zweiten Verarbeitungseinheit zum Realisieren einer redundanten Funktion des Kommunikationsendgeräts, wobei zumindest die erste Verarbeitungseinheit mit dem Netzwerkgerätanschluss kommunikationstechnisch gekoppelt ist. Schließlich betrifft die Erfindung auch ein Brandmeldesystem mit einer Mehrzahl von als Kommunikationsendgeräten ausgebildeten Brandmeldeeinrichtungen, einer Brandmeldezentrale und einem Kommunikationsnetzwerk zum kommunikationstechnischen Koppeln der Brandmeldeeinrichtungen mit der Brandmeldezentrale. Kopplungseinrichtungen, Kommunikationsnetzwerke, Kommunikationsendgeräte sowie auch Brandmeldeeinrichtungen der gattungsgemäßen Art sind im Stand der Technik umfänglich bekannt, sodass es eines gesonderten druckschriftlichen Nachweises hierfür nicht bedarf. Kommunikationsendgeräte können insbesondere Einrichtungen sein, mit denen zum Beispiel Versorgungs- und/oder Infrastruktureinrichtungen gesteuert beziehungsweise geregelt werden können, beispielsweise im Bereich einer Energieversorgung, einer Wasserversorgung, einer Abwasserentsorgung, aber auch im Bereich der Sicherheitstechnik beispielsweise bezüglich einer Zugangssteuerung, im Brandschutz, Komponenten der Industrieautomatisierung und/oder dergleichen. Das Kommunikationsendgerät kann zum Beispiel eine Brandmeldeeinrichtung sein. Die Kommunikationsendgeräte können natürlich auch zumindest teilweise von solchen Einrichtungen umfasst sein. Derartige Einrichtungen sind heutzutage häufig mit dem Internet kommunikationstechnisch gekoppelt, sodass Daten ausgetauscht werden können, mittels denen spezifische Einstellungen vorgenommen werden können, Systemparameter abgefragt und/oder aktualisiert werden können, Sensordaten abgefragt werden können und/oder dergleichen.

Das Kommunikationsnetzwerk, welches beispielsweise ein Rechnernetz, ein Computernetz oder auch ein Computernetzwerk sein kann, dient dazu, die Kommunikationsendgeräte untereinander und/oder mit einer oder mehrerer Zentralstellen kommunikationstechnisch zu verbinden, damit Daten ausgetauscht werden können. Das Kommunikationsnetzwerk ist dabei vorzugsweise ein leitungsgebundenes Kommunikationsnetzwerk. Jedoch kann das Kommunikationsnetzwerk zumindest teilweise auch funkbasiert oder dergleichen sein, indem es zumindest teilweise als drahtloses Kommunikationsnetzwerk ausgebildet ist. Natürlich können auch Kombinationen hiervon vorgesehen sein. Ziel der Nutzung des Kommunikationsnetzwerkes ist es insbesondere, eine gemeinsame Nutzung von Ressourcen wie zum Beispiel Netzwerkdruckern, Servern, Dateien, Datenbanken und/oder dergleichen zu ermöglichen. Dabei kann auch die Möglichkeit vorgesehen sein, dass Netzwerkgeräte, Netzwerkbenutzer, deren Berechtigungen und/oder Daten zumindest teilweise zentral verwaltet werden können.

Die Kommunikation über das Kommunikationsnetzwerk kann unter Nutzung spezifischer Kommunikationsprotokolle erfolgen, beispielsweise Protokolle, die mit dem ISO/OSI-Modell strukturiert werden können. Eine allgemein bekannte Netzstruktur für ein Kommunikationsnetzwerk ist dabei das Ethernet, welches Protokolle wie das Transmission Control Protocol (TCP) und/oder das Internetprotokoll (IP) nutzt. Darüber hinaus kann auch eine Reihe von weiteren Protokollen zweckmäßig oder relevant sein.

Das Kommunikationsnetzwerk kann eine spezifische Netzwerktopologie aufweisen, beispielsweise eine Baum-Topologie, eine Ring-Topologie, eine vermaschte Topologie, Kombinationen hiervon und/oder dergleichen. Die Topologie des Kommunikationsnetzwerks beschreibt die spezifische Anordnung der Kommunikationsendgeräte und deren Kommunikationsverbindungen, die das Kommunikationsnetzwerk bilden, über das die Daten ausgetauscht werden sollen.

Die Topologie eines Kommunikationsnetzwerkes kann für seine Betriebssicherheit beziehungsweise die Sicherheit gegenüber Störungen relevant sein. Bestehen beispielsweise alternative Kommunikationswege zwischen den Kommunikationsendgeräten über das Kommunikationsnetzwerk, kann bei einem Ausfall einer einzelnen Kommunikationsverbindung die Funktionsfähigkeit des Kommunikationsnetzwerkes insgesamt zumindest teilweise erhalten bleiben. Eine Datenübermittlung kann bei einer Störung also über eine alternative Kommunikationsverbindung zwischen zwei jeweiligen der Kommunikationsendgeräte realisiert werden. Darüber hinaus gibt es natürlich auch weitere Überlegungen, die für die Auswahl und die Funktion einer Topologie beachtlich sein können.

Im Bereich der zumindest teilweise leitungsgebundenen Kommunikationsnetzwerke ist die Nutzung einer spezifischen Technik, nämlich Ethernet, weit verbreitet. Die Ethernet-Technik umfasst Vorgaben für die physikalische Ausbildung der Kommunikationsverbindung, beispielsweise Leitertypen, Steckverbindungen und/oder dergleichen sowie auch spezifische Kommunikationsprotokolle zur Durchführung der praktischen Kommunikation beziehungsweise Übertragungsformen, die sich auf Signale auf einer Bitübertragungsschicht, Paketformate von zu übertragenden Daten und/oder dergleichen beziehen können. Ethernet umfasst dabei in der Regel eine physische Schicht gemäß dem OSI-Modell (OSI Layer 1) als auch eine Data-Link-Schicht (OSI Layer 2).

Um ein Kommunikationsendgerät mit dem Kommunikationsnetzwerk kommunikationstechnisch zu koppeln, wird häufig ein Netzwerkgerät genutzt, welches die entsprechende kommunikationstechnische Verbindung herzustellen vermag. Dabei kann zum Erreichen einer Redundanz, insbesondere wenn ein Kommunikationsnetzwerk mit einer Ring-Topologie genutzt wird, vorgesehen sein, dass das Netzwerkgerät in das Kommunikationsnetzwerk eingeschleift ist, sodass es kommunikationstechnisch mit zwei Netzwerkzweigen des Kommunikationsnetzwerks gekoppelt ist. Dabei kann das Netzwerkgerät eine Kommunikationsverbindung zwischen den beiden an ihm angeschlossenen Netzwergzweigen ermöglichen, um zum Beispiel Daten von einem Netzwerkzweig an den anderen und/oder umgekehrt zu übermitteln. Zugleich ist das Kommunikationsendgerät an das Netzwerkgerät angeschlossen. Das Netzwerkgerät stellt dann eine entsprechende Kommunikationsverbindung vom Kommunikationsendgerät zum Kommunikationsnetzwerk her. Dadurch ist es möglich, das Kommunikationsendgerät an nahezu beliebiger Stelle des Kommunikationsnetzwerks einzuschleifen.

Besonders bei sicheren Kommunikationsnetzwerken, beispielsweise mit einer Ring-Topologie, einer vermaschten Topologie oder dergleichen, erweisen sich solche Netzwerkgeräte als vorteilhaft, weil sie eine Zuverlässigkeit von hoher Güte bezüglich der Sicherheit der Datenübertragung erlauben. Ein Netzwerkgerät kann zum Beispiel ein Switch, ein Router oder dergleichen sein.

Gerade im Bereich des Brandschutzes ist eine besonders hohe Anforderung hinsichtlich der Sicherheit in Bezug auf die Kommunikation erforderlich. Brandschutzsysteme, insbesondere für große Anlagen, weiträumige Bereiche, Industrieanlagen, Gebäude oder dergleichen erfordern es, dass eine Vielzahl von Brandmeldeeinrichtungen zuverlässig mit einer Brandmeldezentrale in Kommunikationsverbindung gebracht werden können. Die Zuverlässigkeit steht hier im besonderen Vordergrund. Aus diesem Grund sind Kommunikationsendgeräte bildende Brandmeldeeinrichtungen häufig mit einer Redundanz ausgebildet oder es ist eine komplette Ersatzbrandmeldeeinrichtung als Redundanz vorgesehen.

Eine redundante Ausführung eines Gerätes zieht jedoch einen großen Aufwand nach sich. Falls ein entsprechendes Brandmeldegerät redundant an ein Kommunikationsnetzwerk, beispielsweise ein Ethernet-Netzwerk, angeschlossen werden soll, ist zu beachten, dass ergänzend auch eine Redundanz in Bezug auf das Netzwerkgerät vorgesehen ist, wodurch ein erheblicher Kostennachteil entstehen kann. Dies fällt besonders ins Gewicht, wenn das Brandmeldegerät selbst keine vollständige Redundanz mit einem vollen Funktionsumfang bereitstellt, sondern stattdessen lediglich eine Notfunktionalität, beispielsweise eine Rechnereinheit mit kleinerer Leistung und/oder weniger Speicherkapazität oder dergleichen. Eine kostengünstige redundante Netzwerkankopplung wäre daher wünschenswert.

Bei bekannten Brandmeldesystemen ist beispielsweise vorgesehen, dass parallele digitale Datenleitungen genutzt werden, über die eine Auslösung eines Brandmelders übermittelt werden kann. Verringert sich beispielsweise der Funktionsumfang aufgrund einer Störung des Netzwerkgeräts, besteht die Gefahr, dass nicht mehr festgestellt werden kann, welcher Brandmelder ein Auslösesignal gesendet hat. Dies ist für die Frage der Sicherheit ungünstig.

Besonders nachteilig wirkt sich eine Störung des Netzwerkgeräts aus, die dazu führen kann, dass das Kommunikationsendgerät, insbesondere wenn es eine Brandmeldeeinrichtung ist, vom Kommunikationsnetzwerk getrennt ist. Für einen solchen Fall könnte zwar als Redundanz ein zweites Netzwerkgerät vorgesehen werden, jedoch führt dies zu derart hohen Kosten, dass die Kosten die für das Kommunikationsendgerät übersteigen können, welches als Redundanz eine reduzierte beziehungsweise verringerte Funktionalität bereitstellt, wodurch dieses Prinzip aufgrund des Aufwands sehr ungünstig wird.

Darüber hinaus ist zu beachten, dass beispielsweise bei Kommunikationsnetzwerken mit einer Ring-Topologie bei einer Störung des Netzwerkgeräts von den Daten nunmehr wenigstens zwei statt einem Hop pro Kommunikationsendgerät passiert werden müssen, wodurch sich Nachteile für einen Vorwärtszeitverzug (Forwarding Delay) bei der Datenübermittlung sowie auch eine Verfügbarkeit des gesamten Kommunikationsnetzwerks ergeben können.

Der Erfindung liegt somit die Aufgabe zugrunde, eine kostengünstige und einfach zu realisierende redundante Anbindung eines Kommunikationsendgerätes an ein Kommunikationsnetzwerk bereitzustellen.

Als Lösung werden mit der Erfindung eine Kopplungseinrichtung, ein Kommunikationsnetzwerk, ein Kommunikationsendgerät sowie eine Brandmeldeeinrichtung gemäß den unabhängigen Ansprüchen vorgeschlagen.

Vorteilhafte Weiterbildungen ergeben sich durch Merkmale der abhängigen Ansprüche.

Bezüglich einer gattungsgemäßen Kopplungseinrichtung wird insbesondere vorgeschlagen, dass diese einen dritten Anschluss zum unmittelbaren Anschließen an das Kommunikationsendgerät aufweist, wobei die Kopplungseinrichtung ausgebildet ist, in einem ersten Betriebszustand eine kommunikationstechnische Kopplung zwischen dem ersten und dem zweiten Anschluss und in einem zweiten Betriebszustand eine kommunikationstechnische Kopplung zwischen dem ersten und dem dritten Anschluss herzustellen.

Bezüglich eines gattungsgemäßen Kommunikationsnetzwerks wird insbesondere vorgeschlagen, dass dieses wenigstens eine Kopplungseinrichtung gemäß der Erfindung aufweist, wobei die wenigstens eine Kopplungseinrichtung zwischen einem jeweiligen der Netzwerkzweige und dem Netzwerkgerät angeschlossen ist.

Bezüglich eines gattungsgemäßen Kommunikationsendgeräts wird insbesondere vorgeschlagen, dass dieses einen Hilfsanschluss zum Anschließen an eine Kopplungseinrichtung der Erfindung aufweist, wobei zumindest die zweite Verarbeitungseinheit am Hilfsanschluss angeschlossen ist.

Bezüglich eines gattungsgemäßen Brandmeldesystems wird insbesondere vorgeschlagen, dass das Kommunikationsnetzwerk und die Kommunikationsendgeräte gemäß der Erfindung ausgebildet sind.

Die Erfindung basiert unter anderem vorzugsweise auf dem Gedanken, dass mittels der Kopplungseinrichtung eine redundante kommunikationstechnische Verbindung zwischen dem Kommunikationsendgerät und dem Kommunikationsnetzwerk realisiert werden kann, die bedarfsweise, das heißt vorzugsweise abhängig von der Funktionalität des Netzwerkendgeräts, aktiviert werden kann, um zum Beispiel bei einer Störung des Netzwerkgerätes weiterhin eine Kommunikation zwischen dem Kommunikationsendgerät und dem Kommunikationsnetzwerk zu ermöglichen. Mittels der Kopplungseinrichtungen kann diese redundante Funktionalität mit wenig Aufwand und kostengünstig realisiert werden. Die Kopplungseinrichtung ist dabei zum Beispiel zwischen einem der beiden Netzwerkzweige, die an das Netzwerkgerät angeschlossen sein können, und dem Netzwerkgerät selbst zwischengeschaltet. Natürlich kann vorgesehen sein, dass, insbesondere abhängig von einer Netzwerktopologie des Kommunikationsnetzwerkes, jeder der Netzwerkzweige über eine Kopplungseinrichtung gemäß der Erfindung an das Netzwerkgerät angeschlossen ist. Dadurch kann die Kommunikation zu jedem der Netzwerkzweige redundant realisiert werden, wenn das Netzwerkgerät aufgrund einer Störung ausgefallen ist. Auch wenn vorliegend nur zwei Netzwerkzweige zum Anschließen am Netzwerkgerät vorgesehen sind, kann - abhängig von der Topologie des Kommunikationsnetzwerks und der Konstruktion des Netzwerkgeräts - natürlich auch ein Anschluss von mehr als zwei Netzwerkzeigen vorgesehen sein.

Dabei ermöglicht es die Erfindung, bei einem störungslosen Betrieb des Netzwerkgeräts den jeweiligen Netzwerkzweig, vorzugsweise unmittelbar, mit dem Netzwerkgerät kommunikationstechnisch zu koppeln. Die Kopplungseinrichtung braucht also in diesem Betriebszustand nicht einzugreifen. Sie kann insbesondere deaktiviert sein.

Beispielsweise kann der erste Betriebszustand der Kopplungseinrichtung ein regulärer Betriebszustand sein, der automatisch bei einer Inbetriebnahme der Kopplungseinrichtung aktiviert ist. Durch ein entsprechendes Steuersignal kann die Kopplungseinrichtung vom ersten in den zweiten Betriebszustand wechseln, indem sie den entsprechenden Netzwerkzweig, an dem sie angeschlossen ist, kommunikationstechnisch mit dem Kommunikationsendgerät koppelt. Zu diesem Zweck ist das Kommunikationsendgerät dann vorzugsweise mit seinem Hilfsanschluss an dem dritten Anschluss der Kopplungseinrichtung angeschlossen.

Um ein Steuersignal für die Kopplungseinrichtung bereitzustellen, kann vorgesehen sein, dass das Kommunikationsendgerät selbst die Kommunikation über das Netzwerkgerät überwacht. Wird eine Störung bezüglich der Kommunikation festgestellt, kann das Kommunikationsendgerät das Steuersignal für die Kopplungseinrichtung bereitstellen, die dann vom ersten Betriebszustand in den zweiten Betriebszustand wechselt und somit eine Kommunikation zwischen dem Kommunikationsendgerät und dem Kommunikationsnetzwerk weiterhin ermöglicht. Das Steuersignal kann dabei über den dritten Anschluss für die Kopplungseinrichtung zur Verfügung gestellt werden. Es kann aber auch vorgesehen sein, dass das Steuersignal über einen separaten Anschluss, beispielsweise einen Steueranschluss der Kopplungseinrichtung, zur Verfügung gestellt wird. Das Kommunikationsendgerät kann hierfür beispielsweise einen Hilfsanschluss aufweisen.

Die Anschlüsse können zumindest teilweise zum Beispiel als elektromechanische Steckverbinder ausgebildet sein. Sie können jedoch auch als Hardware-Schnittstelle oder dergleichen ausgebildet sein. Die Kopplungseinrichtung kann geeignete elektrische beziehungsweise elektronische Einheiten aufweisen, mit denen die kommunikationstechnische Kopplung für den ersten und den zweiten Betriebszustand realisiert werden kann. Zu diesem Zweck kann zum Beispiel eine Schalteinheit vorgesehen sein, mittels der die entsprechenden kommunikationstechnischen Kopplungen realisiert werden können. Die Schalteinheit kann zum Beispiel als elektronischer Analogschalter, als elektromechanischer Schalter und/oder dergleichen ausgebildet sein.

Die erste und die zweite Verarbeitungseinheit des Kommunikationsendgerätes können durch eine Hardwareschaltung und/oder eine programmgesteuerte Rechnereinheit gebildet sein. Grundsätzlich können die erste und die zweite Verarbeitungseinheit, insbesondere hinsichtlich ihrer Leistungsfähigkeit und Funktionalität, im Wesentlichen gleich ausgebildet sein. Vorzugsweise ist die zweite Verarbeitungseinheit jedoch mit einer geringeren Leistung beziehungsweise Funktionalität realisiert, wodurch sie deutlich kostengünstiger wird. Die erste und die zweite Verarbeitungseinheit können vom Kommunikationsendgerät, insbesondere von einem Gehäuse des Kommunikationsendgerätes, umfasst sein.

Das Kommunikationsendgerät und das Netzwerkgerät können als separate einzelne Baueinheiten ausgebildet sein. Beispielsweise können sie eigene Gehäuse umfassen, die Hardware-Schnittstellen aufweisen, die miteinander gekoppelt werden können. Das Koppeln kann lösbar oder auch nicht-lösbar beziehungsweise unlösbar vorgesehen sein.

Darüber hinaus wird vorgeschlagen, dass das Kommunikationsendgerät das Netzwerkgerät zumindest teilweise umfasst. Das Kommunikationsendgerät und das Netzwerkgerät können folglich zumindest teilweise auch einstückig, insbesondere mit einem gemeinsamen Gehäuse, ausgebildet sein. Separate Verbindungselemente brauchen dann zumindest teilweise nicht vorgesehen zu sein. Der Netzwerkgerätanschluss kann somit zum Beispiel auch als eine interne Schnittstelle des Kommunikationsendgeräts realisiert sein.

Es wird ferner vorgeschlagen, dass die Kopplungseinrichtung ausgebildet ist, die kommunikationstechnische Kopplung zwischen dem ersten und dem zweiten Anschluss im zweiten Betriebszustand zu deaktivieren. Dies erlaubt es, Rückwirkungen durch das Netzwerkgerät, wenn es gestört ist, weitgehend zu vermeiden. Dadurch können Auswirkungen auf die Kommunikationsverbindung zwischen dem Kommunikationsendgerät über die Kopplungseinrichtung zum Kommunikationsnetzwerk, insbesondere den ersten Netzwerkzweig, weitgehend vermieden werden. Das Deaktivieren kann durch eine Schalteinheit realisiert sein, die den zweiten Anschluss vom ersten und vom dritten Anschluss der Kopplungseinrichtung kommunikationstechnisch trennen kann.

Gemäß einer Weiterbildung wird vorgeschlagen, dass die Kopplungseinrichtung ausgebildet ist, die kommunikationstechnische Kopplung zwischen dem ersten und dem dritten Anschluss im ersten Betriebszustand zu deaktivieren. Dadurch kann erreicht werden, dass im ungestörten Zustand des Netzwerkgeräts der dritte Anschluss deaktiviert ist, sodass die kommunikationstechnische Kopplung zwischen dem ersten und dem zweiten Anschluss der Kopplungseinrichtung im Wesentlichen ungestört ist. Zu diesem Zweck kann die Schalteinheit entsprechend ausgebildet sein, indem sie beispielsweise ein geeignetes Schaltelement bereitstellt.

Es wird ferner vorgeschlagen, dass die Kopplungseinrichtung eine Umschalteinheit wenigstens zum Bereitstellen des ersten und des zweiten Betriebszustands aufweist, wobei die Umschalteinheit wenigstens mit dem ersten, dem zweiten und dem dritten Anschluss kommunikationstechnisch gekoppelt ist. Die Umschalteinheit ermöglicht es also, auf einfache Weise abhängig vom jeweiligen Betriebszustand die jeweilige kommunikationstechnische Kopplung zwischen den Anschlüssen der Kopplungseinrichtung herzustellen.

Zu diesem Zweck wird ferner vorgeschlagen, dass die Kopplungseinrichtung eine Steuereinheit zumindest zum Steuern der Umschalteinheit aufweist. Die Steuereinheit kann aufgrund des Steuersignals die Umschalteinheit in geeigneter Weise in einen jeweiligen, dem jeweiligen Betriebszustand entsprechenden Schaltzustand schalten.

Die Steuereinheit kann vorzugsweise eine Hardwareschaltung und/oder eine programmgesteuerte Rechnereinheit umfassen. Die Steuereinheit kann eine separate Baugruppe sein, die vom Kommunikationsendgerät umfasst ist. Sie kann aber auch als separate Steuereinheit ausgebildet sein, die an die Kopplungseinrichtung angeschlossen ist. Die Steuereinheit kann darüber hinaus zumindest teilweise auch von einer übergeordneten Steuereinheit oder auch vom Kommunikationsendgerät umfasst sein.

Darüber hinaus wird vorgeschlagen, dass die Kopplungseinrichtung eine mit dem ersten Anschluss kommunikationstechnisch gekoppelte induktive Einheit und eine mit der induktiven Einheit und mit dem zweiten Anschluss kommunikationstechnisch gekoppelte Schnittstellenschaltung zum Kodieren und Dekodieren von Daten und/oder zum Modulieren und Demodulieren von Signalen aufweist, um unter Zusammenwirkung mit der induktiven Einheit eine physikalische Schnittstelle am ersten Anschluss bereitzustellen.

Die induktive Einheit ist mit dem ersten Anschluss kommunikationstechnisch gekoppelt. Vorzugsweise ist sie an diesen Anschluss unmittelbar angeschlossen. Die induktive Einheit dient dazu, eine elektrische Anpassung an den am ersten Anschluss angeschlossenen Netzwerkzweig elektrisch realisieren zu können. Die induktive Einheit kann induktive Bauelemente, beispielsweise eine oder mehrere elektrische Spulen, einen oder mehrere Übertrager und/oder dergleichen umfassen.

Die Schnittstellenschaltung, gelegentlich auch PHY genannt, dient dazu, eine entsprechende signaltechnische beziehungsweise datentechnische Ankopplung des Netzwerkgeräts beziehungsweise des Kommunikationsgeräts an den Netzwerkzweig zu realisieren. Zugleich kann sie auch eine entsprechende Schnittstelle für den zweiten Anschluss der Kopplungseinrichtung realisieren. Die Zusammenwirkung der induktiven Einheit mit der Schnittstellenschaltung ermöglicht es, eine vorgegebene physikalische Schnittstelle am ersten Anschluss der Kopplungseinrichtung bereitzustellen.

Weiterhin wird vorgeschlagen, dass die Umschalteinheit zwischen dem ersten Anschluss und der induktiven Einheit angeschlossen ist, wobei zwischen der Umschalteinheit und dem dritten Anschluss eine induktive Hilfseinheit und eine Schnittstellenhilfsschaltung angeschlossen sind. Dadurch kann der erste Anschluss abhängig vom jeweiligen Betriebszustand der Kopplungseinrichtung unmittelbar umgeschaltet werden. Für die jeweiligen Kommunikationswege entsprechend der jeweiligen Betriebszustände der Kopplungseinrichtung sind somit separate induktive Einheiten und Schnittstellenschaltungen vorgesehen, sodass auch hier ein hohes Maß an Redundanz und Verfügbarkeit erreicht werden kann.

Alternativ wird vorgeschlagen, dass die Umschalteinheit zwischen der induktiven Einheit und der Schnittstellenschaltung angeschlossen ist, wobei zwischen der Umschalteinheit und dem dritten Anschluss die Schnittstellenhilfsschaltung angeschlossen ist. Bei dieser Ausgestaltung wird also die induktive Einheit für beide Betriebszustände genutzt. Lediglich die Schnittstellenhilfsschaltung und die Schnittstellenschaltung sind abhängig vom jeweiligen Betriebszustand aktiviert.

Besonders kostengünstig erweist es sich, wenn die Umschalteinheit zwischen der Schnittstellenschaltung und dem zweiten Anschluss und ferner unmittelbar am dritten Anschluss angeschlossen ist. Bei dieser Ausgestaltung sind nämlich keine Hilfseinheiten beziehungsweise Hilfsschaltungen erforderlich. Die induktive Einheit sowie die Schnittstellenschaltung werden in beiden Betriebszuständen genutzt. Dadurch können zum Beispiel schlafende Fehler in im ersten Betriebszustand nicht genutzten Hilfseinheiten ausgeschlossen werden.

Vorzugsweise umfasst die Kopplungseinrichtung einen Steueranschluss zumindest zum Steuern des Betriebszustands mittels der Steuereinheit. Über den Steueranschluss kann ein entsprechendes Steuersignal von der Steuereinheit zugeführt werden, sodass der gewünschte Betriebszustand eingenommen werden kann. Der Steueranschluss kann als separater Anschluss ausgebildet sein. In alternativen Ausgestaltungen kann der Steueranschluss jedoch auch mit dem dritten Anschluss kombiniert sein, insbesondere einstückig ausgebildet sein. Der Steueranschluss ist vorzugsweise ebenfalls ein Hardwareanschluss, der beispielsweise mittels elektromechanischer Steckverbinder, als feste nicht lösbare Verbindung oder dergleichen realisiert sein kann.

Die Erfindung eignet sich besonders für Kommunikationsnetzwerke, die zumindest teilweise eine ringförmige Netzwerktopologie aufweisen. Dadurch ist es auf besonders einfache Weise möglich, eine große Zuverlässigkeit beziehungsweise Redundanz in Bezug auf eine Ankopplung der Kommunikationsendgeräte an das Kommunikationsnetzwerk zu ermöglichen. Ist beispielsweise aufgrund einer Störung des Netzwerkgeräts die Kommunikation zwischen den am Netzwerkgerät angeschlossenen Netzwerkzweigen unterbrochen, kann durch die Kopplungseinrichtung immer noch eine Kommunikation des Kommunikationsendgeräts mit wenigstens einem der beiden Netzwerkzweige erreicht werden, sodass eine Redundanz erreicht werden kann. Dem Grunde nach kann dies beispielsweise auch bei einer vermaschten Netzwerktopologie erreicht werden.

Das Kommunikationsendgerät weist vorzugsweise einen Hilfsanschluss zum Anschließen an die Kopplungseinrichtung auf. Dabei ist zumindest die zweite Verarbeitungseinheit am Hilfsanschluss angeschlossen. Diese Ausgestaltung hat den Vorteil, dass die zweite Verarbeitungseinheit auch dazu genutzt werden kann, das Steuersignal für den durch die Kopplungseinrichtung einzustellenden Betriebszustand bereitzustellen. Besonders vorteilhaft erweist es sich jedoch, wenn das Steuersignal durch eine Signalverarbeitung bereitgestellt wird, die durch die erste und zweite Verarbeitungseinheit realisiert ist. So kann vorgesehen sein, dass die erste Verarbeitungseinheit die Kommunikation mit einem ersten der beiden Netzwerkzweige überwacht, wohingegen die zweite Verarbeitungseinheit die Kommunikation mit dem zweiten der beiden Netzwerkzweige überwacht. Besonders vorteilhaft kann ferner vorgesehen sein, dass die Kommunikation mit beiden Netzwerkzweigen mittels beiden Verarbeitungseinheiten überwacht wird. Entsprechende Verarbeitungssignale können dann gemeinsam ausgewertet werden, wobei ein Steuersignal erst dann abgegeben wird, wenn beide Verarbeitungseinheiten eine Störung in der Kommunikation ermittelt haben. Dadurch können Unterbrechungen in der Kommunikation zwischen den beiden Netzwerkzweigen aufgrund des Wechsels der Betriebszustände der Kopplungseinrichtung reduziert werden, wodurch eine größere Zuverlässigkeit der Funktion gemäß der Erfindung erreicht werden kann.

Vorzugweise ist das Kommunikationsendgerät ausgebildet, eine Kommunikation des Netzwerkgeräts zumindest mittels der zweiten Verarbeitungseinheit zu ermitteln und abhängig von der ermittelten Kommunikation ein Umschaltsignal als Steuersignal für die Kopplungseinrichtung bereitzustellen. Auf diese Weise kann mit wenig Aufwand das entsprechende Umschaltsignal für die Kopplungseinrichtung erzeugt werden.

Darüber hinaus wird vorgeschlagen, dass das Kommunikationsendgerät ausgebildet ist, eine Kommunikation des Netzwerkgeräts mittels der ersten und der zweiten Verarbeitungseinheit zu ermitteln und abhängig von der ermittelten Kommunikation das Umschaltsignal für die Kopplungseinrichtung bereitzustellen. Hierdurch kann eine größere Zuverlässigkeit bezüglich des Ermittelns einer Störung des Netzwerkgeräts realisiert werden.

Weitere Vorteile und Merkmale sind der folgenden Beschreibung von Ausführungsbeispielen anhand der Figuren zu entnehmen. In den Figuren bezeichnen gleiche Bezugszeichen gleiche Merkmale und Funktionen.

Es zeigen:
- FIG 1: eine schematische Darstellung eines Ausschnitts eines Kommunikationsnetzwerkes in Ring-Topologie mit einem Ethernet-Switch, der an zwei Netzwerkzweige des Kommunikationsnetzwerkes angeschlossen ist und an dem ein Kommunikationsendgerät angeschlossen ist,
- FIG 2: eine schematische Darstellung wie FIG 1, wobei die Netzwerkankopplung mittels zweier Ethernet-Switche redundant ausgebildet ist,
- FIG 3: eine schematische Darstellung wie in FIG 1, wobei eine redundante Netzwerkankopplung mittels einer Kopplungseinrichtung anstelle eines zweiten Switches realisiert ist,
- FIG 4: eine schematische Darstellung eines Aufbaus der Kopplungseinrichtung gemäß FIG 3 in einer ersten Ausgestaltung,
- FIG 5: eine schematische Darstellung wie FIG 4 gemäß einer zweiten Ausgestaltung,
- FIG 6: eine schematische Darstellung wie FIG 3, bei der jeder der beiden Netzwerkzweige redundant angekoppelt ist,
- FIG 7: eine schematische Darstellung wie FIG 3, bei der das Kommunikationsendgerät eine Hilfsumschalteinheit aufweist, und
- FIG 8: eine schematische Darstellung wie FIG 3, bei der das Kommunikationsendgerät eine Steuereinheit für die Kopplungseinrichtung umfasst und über einen separaten Anschluss mit der Kopplungseinrichtung kommunikationstechnisch gekoppelt ist.

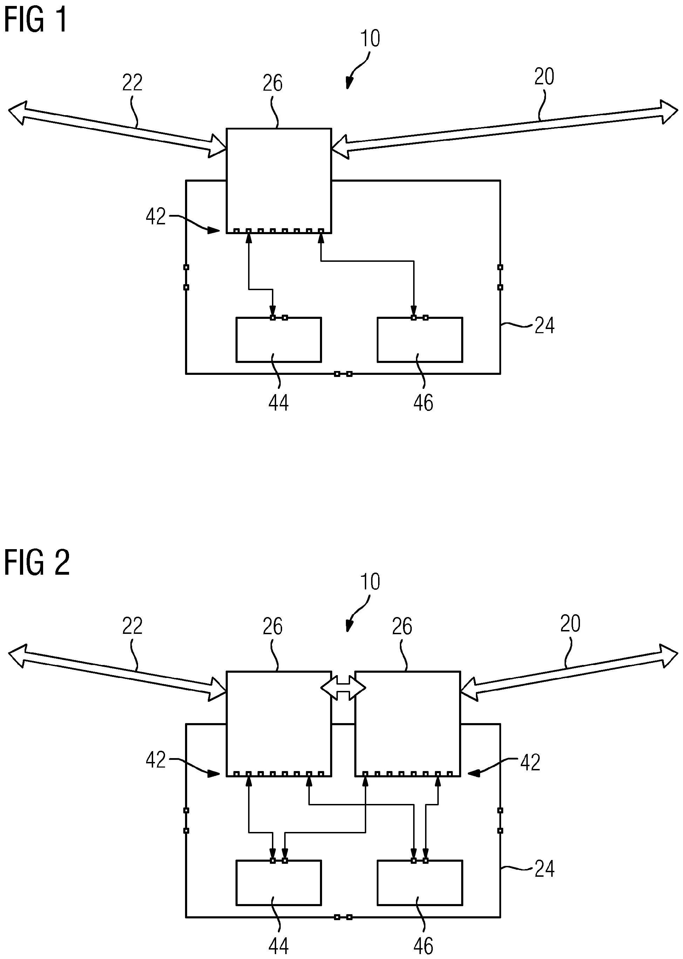

FIG 1 zeigt in einer schematischen Prinzipdarstellung einen Ausschnitt aus einem Kommunikationsnetzwerk 10, welches vorliegend eine Ring-Topologie aufweist. Das Kommunikationsnetzwerk 10 kann jedoch auch eine andere geeignete NetzwerkTopologie aufweisen.

Das Kommunikationsnetzwerk 10 ist vorliegend leitungsgebunden ausgebildet und dient in dieser Ausgestaltung dazu, im Folgenden noch beschriebene Brandmeldeeinrichtungen kommunikationstechnisch mit einer Brandmeldezentrale zu koppeln, um ein Brandmeldesystem auszubilden. Die Funktion der Erfindung ist jedoch nicht auf die Anwendung bei Brandmeldesystemen begrenzt.

Das Kommunikationsnetzwerk 10 umfasst einen ersten Netzwerkzweig 20 sowie einen zweiten Netzwergzweig 22, die gemeinsam an dem Ethernet-Switch 26 als Netzwerkgerät angeschlossen und über diesen kommunikationstechnisch gekoppelt sind. Der Ethernet-Switch 26 seinerseits ist an einen Netzwerkgerätanschluss 42 einer als Kommunikationsendgerät ausgebildeten Brandmeldeeinrichtung 24 angeschlossen.

Die Brandmeldeeinrichtung 24 umfasst eine Hauptrechnereinheit 44 als erste Verarbeitungseinheit sowie eine Hilfsrechnereinheit 46 als zweite Verarbeitungseinheit. Die Hilfsrechnereinheit 46 dient zum Realisieren einer redundanten Funktionalität der Brandmeldeeinrichtung 24, wenn die Hauptrechnereinheit 44 in einem gestörten Betriebsmodus ist. Vorliegend ist vorgesehen, dass die Hilfsrechnereinheit 46 nicht den vollen Funktionsumfang der Hauptrechnereinheit 44 abbildet, sondern lediglich eine Notfunktionalität bereitstellt. Die Hilfsrechnereinheit 46 wird auch "Degrade CPU" genannt.

Sowohl die Hauptrechnereinheit 44 als auch die Hilfsrechnereinheit 46 sind über den Netzwerkgerätanschluss 42 kommunikationstechnisch mit dem Ethernet-Switch 26 und über diesen mit dem Kommunikationsnetzwerk 10, insbesondere dessen Netzwerkzweige 20, 22 gekoppelt.

In einem ungestörten Betrieb ist vorliegend vorgesehen, dass die Hilfsrechnereinheit 46 mit der Hauptrechnereinheit 44 in Kommunikationsverbindung steht und diese überwacht. Dies kann in alternativen Ausgestaltung auch anders vorgesehen sein. Mittels einer nicht weiter dargestellten Überwachungsschaltung, zum Beispiel nach Art eines Watch-Dog oder dergleichen, wird die Hauptrechnereinheit 44 vorliegend ebenfalls überwacht. Dadurch ist die Hilfsrechnereinheit 46 in dieser Ausgestaltung stets aktiviert und steht mit der Überwachungsschaltung in Kommunikationsverbindung. Meldet die Überwachungsschaltung eine Störung in Bezug auf die Hauptrechnereinheit 44, ist vorliegend vorgesehen, dass die Hilfsrechnereinheit 46 zum Abgeben von Meldungen aktiviert wird.

Wird eine Störung der Hauptrechnereinheit 44 ermittelt, kann abhängig hiervon auf die Hilfsrechnereinheit 46 umgeschaltet werden. Dadurch steht bezüglich der Brandmeldeeinrichtung 24 eine redundante Funktionalität zur Verfügung.

Die gemäß FIG 1 beschriebene Ausführungsform erweist sich jedoch dann als nachteilig, wenn die Störung den Ethernet-Switch 26 selbst betrifft. In diesem Fall ist nicht nur die Kommunikation der Brandmeldeeinrichtung 24 mit dem Kommunikationsnetzwerk 10 unterbrochen, sondern es kann darüber hinaus auch die Kommunikation zwischen dem ersten und dem zweiten Netzwerkzweig 20, 22, die über den Ethernet-Switch 26 erfolgen soll, betroffen beziehungsweise unterbrochen sein. Dadurch kann die Kommunikation innerhalb des Kommunikationsnetzwerks 10 beeinträchtigt sein, insbesondere können erhöhte Laufzeiten von Datenübertragungen die Folge sein.

FIG 2 zeigt eine Weiterbildung basierend auf FIG 1, bei der die Brandmeldeeinrichtung 24 nunmehr zwei Netzwerkgerätanschlüsse 42 aufweist, die jeweils sowohl mit der Hauptrechnereinheit 44 als auch mit der Hilfsrechnereinheit 46 kommunikationstechnisch gekoppelt sind. An jedem der Netzwerkgerätanschlüsse 42 ist ein jeweiliger Ethernet-Switch 26 angeschlossen. Die beiden Ethernet-Switche 26 sind kommunikationstechnisch unmittelbar miteinander gekoppelt. Darüber hinaus ist einer der beiden Ethernet-Switche 26 mit dem ersten Netzwerkzweig 20 und der andere der beiden Ethernet-Switche 26 mit dem zweiten Netzwerkzweig 22 kommunikationstechnisch gekoppelt beziehungsweise an diesen angeschlossen.

Diese Ausführungsform hat den Vorteil, dass bei einer Störung bei einem der beiden Ethernet-Switche 26 über den jeweils anderen der beiden Ethernet-Switche 26 die Kommunikation der Brandmeldeeinrichtung 24 mit dem Kommunikationsnetzwerk 10 aufrechterhalten werden kann. Es ist also bezüglich der Netzwerkanbindung eine Redundanz realisiert.

Gleichwohl erweist sich diese Ausführungsform als nachteilig, weil sie zwei kostenaufwendige Ethernet-Switche 26 benötigt. Darüber hinaus müssen sowohl die Hauptrechnereinheit 44 als auch die Hilfsrechnereinheit 46 mit beiden Ethernet-Switchen 26 gekoppelt sein und die Brandmeldeeinrichtung 24 benötigt entsprechende Anschlüsse 42 für die beiden Ethernet-Switche 26. Dies erhöht den Aufwand auch bei der Brandmeldeeinrichtung 24 beträchtlich. Des Weiteren kann sich die Wahrscheinlichkeit erhöhen, dass die Kommunikationsverbindung zwischen den Netzwerkzweigen 20 und 22 unterbrochen wird, sowie die Signallaufzeit zwischen den Netzwerkzweigen 20 und 22 erhöhen, weil nun zwei störungsfreie Ethernet-Switche 26 für diese Kommunikationsverbindung erforderlich sind und passiert werden müssen.

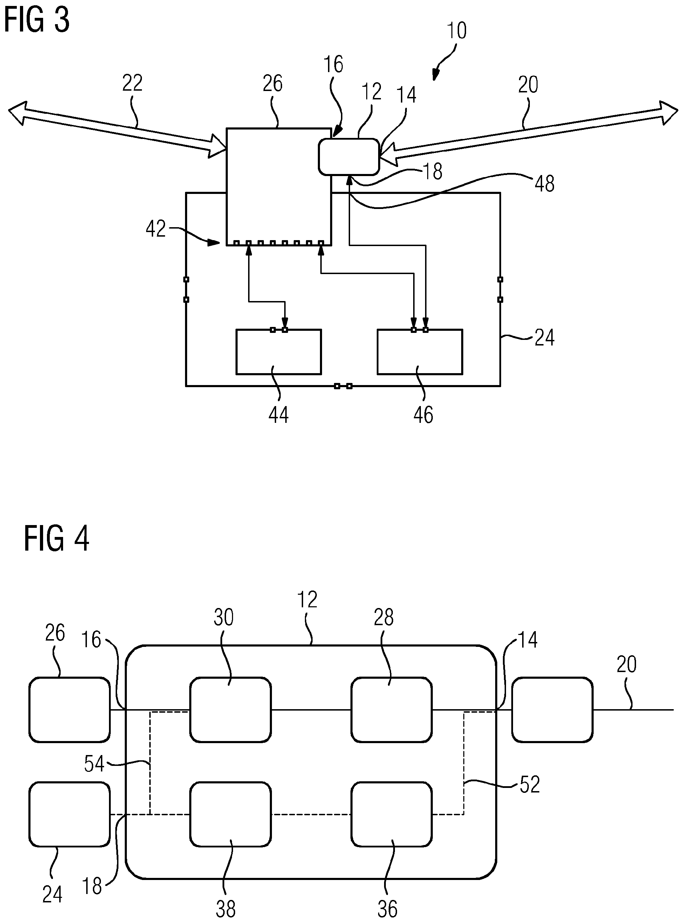

FIG 3 zeigt nun eine Ausführungsform, die von der Ausführungsform gemäß FIG 1 ausgeht und die den Aufwand für einen zweiten Ethernet-Switch 26 vermeidet. Zu diesem Zweck ist vorgesehen, dass der erste Netzwerkzweig 20 nunmehr nicht mehr unmittelbar am Ethernet-Switch 26 angeschlossen ist, sondern stattdessen an eine Kopplungseinrichtung 12. Die Kopplungseinrichtung 12 weist hierzu einen ersten Anschluss 14 auf, der an dem ersten Netzwerkzweig 20 angeschlossen ist. Darüber hinaus umfasst die Kopplungseinrichtung 12 einen zweiten Netzwerkanschluss 16, der an dem Ethernet-Switch 26 angeschlossen ist. Dadurch können die Netzwerkzweige 20, 22 kommunikationstechnisch miteinander gekoppelt werden.

Darüber hinaus umfasst die Kopplungseinrichtung 12 einen dritten Anschluss 18, der an einem Hilfsanschluss 48 der Brandmeldeeinrichtung 24 angeschlossen ist. Der Hilfsanschluss 48 ist ferner kommunikationstechnisch mit der Hilfsrechnereinheit 46 gekoppelt.

Die Kopplungseinrichtung 12 benötigt einen erheblich geringeren Aufwand als der zweite Ethernet-Switch 26, um eine kommunikationstechnische Kopplung der Hilfsrechnereinheit 46 mit dem Kommunikationsnetzwerk 10, und hier insbesondere dem ersten Netzwerkzweig 20, zu realisieren. Darüber hinaus braucht die Kopplungseinrichtung 12 nicht kommunikationstechnisch mit der Hauptrechnereinheit 44 gekoppelt zu sein, um die gewünschte Redundanz realisieren zu können. Dadurch kann mit erheblich weniger Aufwand als bei den voranstehend beschriebenen Ausführungsformen eine zuverlässige Redundanz nicht nur bezüglich der Funktion der Brandmeldeeinrichtung 24, sondern auch bezüglich der jeweiligen Ankopplung an das Kommunikationsnetzwerk 10 erreicht werden.

FIG 4 zeigt in einer schematischen Blockdarstellung einen Aufbau für die Kopplungseinrichtung 12 gemäß FIG 3. Aus FIG 4 ist ersichtlich, dass die Kopplungseinrichtung 12 mit ihrem ersten Anschluss 14 über eine elektromechanische Steckverbindung an eine nicht bezeichnete Kommunikationsleitung des ersten Netzwerkzweigs 20 angeschlossen ist. Die Steckverbindung kann mit geeigneten, normierten Steckverbindern ausgeführt sein, beispielsweise RJ45, SFP und/oder dergleichen. Mit dem zweiten Anschluss 16 ist die Kopplungseinrichtung 12 an den Ethernet-Switch 26 und mit dem dritten Anschluss 18 ist sie an die Brandmeldeeinrichtung 24 angeschlossen.

Die Kopplungseinrichtung 12 umfasst eine induktive Einheit 28, gelegentlich auch "Magnetics" genannt, die mit einem Anschluss an dem ersten Anschluss 14 der Kopplungseinrichtung 12 angeschlossen ist. Ein zweiter Anschluss der induktiven Einheit 28 ist an eine Schnittstellenschaltung 30 angeschlossen, die ihrerseits an den zweiten Anschluss 16 der Kopplungseinrichtung 12 angeschlossen ist.

Die induktive Einheit 28 umfasst eine oder mehrere elektrische Spulen, Übertrager und/oder dergleichen und dient zusammen mit der Schnittstellenschaltung 30 zur Bereitstellung einer physikalischen Schnittstelle am ersten Anschluss 14. Die Schnittstellenschaltung 30 ist eine elektronische Einheit, die eine Hardwareschaltung und/oder eine programmgesteuerte Rechnereinheit umfassen kann und die dazu dient, Daten zu codieren und zu decodieren und/oder Signale zu modulieren und zu demodulieren. Am zweiten Anschluss 16 stellt die Schnittstellenschaltung 30 eine spezifische Schnittstelle bereit, beispielsweise Media Independent Interface (MII) oder dergleichen.

Aus FIG 4 ist ferner ersichtlich, dass am ersten Anschluss 14 eine erste Ankopplung 52 angeschlossen ist, die über eine induktive Hilfseinheit 36 sowie eine Schnittstellenhilfsschaltung 38 an den dritten Anschluss 18 angeschlossen ist. Die induktive Hilfseinheit 36 sowie die Schnittstellenhilfsschaltung 38 können dem Grunde nach vergleichbar wie die induktive Einheit 28 und die Schnittstellenschaltung 30 ausgebildet sein. Über den vorgenannten Kommunikationszweig kann der erste Anschluss 14 kommunikationstechnisch über die Kopplungseinrichtung 12 mit dem dritten Anschluss 18 gekoppelt werden, sodass die Hilfsrechnereinheit 46 kommunikationstechnisch an dem zweiten Netzwerkzweig 20 angeschlossen werden kann.

Bei dieser Ausgestaltung ist es zweckmäßig, die induktive Hilfseinheit 36 sowie die Schnittstellenhilfsschaltung 38 vorzusehen, damit eine entsprechende signaltechnische Anpassung zwischen der Hilfsrechnereinheit 46 und dem ersten Netzwerkzweig 20 realisiert werden kann.

FIG 4 zeigt jedoch auch eine alternative Ausgestaltung, bei der anstelle der ersten Ankopplung 52 eine zweite Ankopplung 54 vorgesehen ist, die den ersten Anschluss 16 mit dem dritten Anschluss 18 kommunikationstechnisch koppelt. Bei dieser Ausgestaltung ist es gegenüber der vorgenannten Ausgestaltung im Rahmen der ersten Ankopplung 52 nicht mehr erforderlich, die induktive Hilfseinheit 36 sowie die Schnittstellenhilfsschaltung 38 vorzusehen. Durch die bereits vorhandenen Einheiten, nämlich die induktive Einheit 28 sowie die Schnittstellenschaltung 30, kann die entsprechende Anpassung realisiert werden, ohne dass es weiterer gesonderter Einheiten bedarf .

Dem Grunde nach kann eine Ankopplung jedoch auch zwischen der induktiven Einheit 28 und der Schnittstellenschaltung 30 vorgesehen werden. Dies ist in FIG 4 nicht dargestellt. Bei einer derartigen Ankopplung wäre dann vorzugsweise lediglich die Schnittstellenhilfsschaltung 38 vorzusehen. Die induktive Hilfseinheit 36 wäre bei dieser Ausgestaltung ebenfalls nicht zwingend erforderlich.

Je nach spezifischer Anwendung kann die Ankopplung durch die Kopplungseinrichtung 12 vorgesehen sein, beispielsweise indem die erste Ankopplung 52, die zweite Ankopplung 54 oder dergleichen vorgesehen werden kann.

In der vorliegenden Ausgestaltung gemäß FIG 4 ist vorgesehen, dass die Signale am zweiten und am dritten Anschluss 16, 18 der Kopplungseinrichtung 12 anliegen, sodass die Kopplungseinrichtung 12 eine Schaltfunktion nicht zu realisieren braucht. Lediglich das Anordnen der Kopplungseinrichtung 12 ermöglicht somit bereits den redundanten Betrieb.

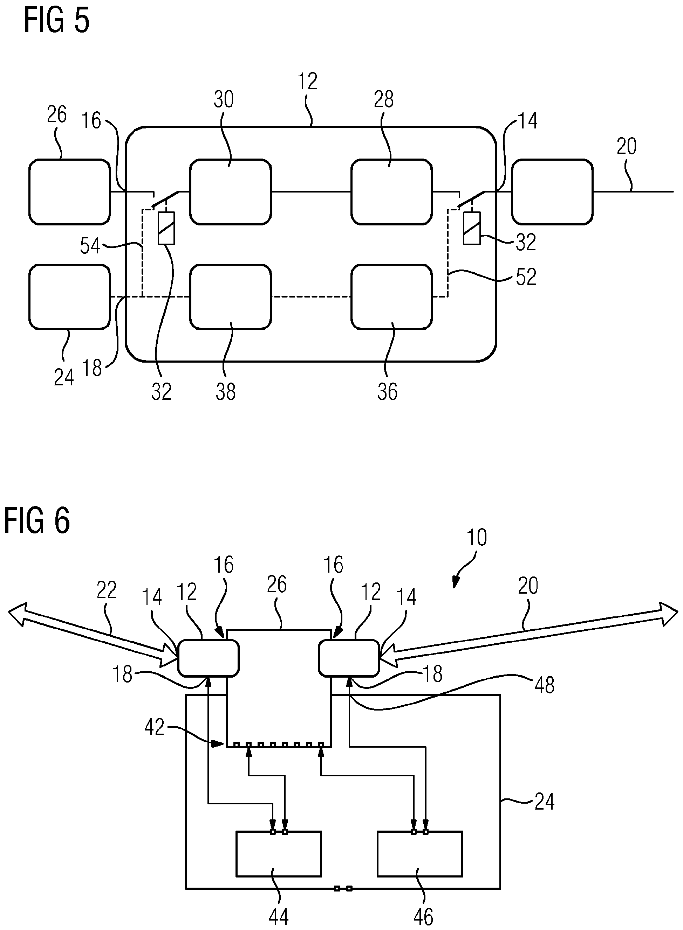

Um zu vermeiden, dass der Ethernet-Switch 26 in einem Störungsfall ungünstig auf den ersten Netzwerkzweig 20 einwirken kann, ist eine Abwandlung der Kopplungseinrichtung 12 gemäß FIG 5 vorgesehen. Bei dieser Ausgestaltung gemäß FIG 5 ist vorgesehen, dass die jeweilige Ankopplung, beispielsweise die erste Ankopplung 52 oder die zweite Ankopplung 54, über eine Umschalteinheit 32 mit dem ersten Netzwerkanschluss 20 kommunikationstechnisch gekoppelt werden kann.

Im ersten Betriebszustand stellt die Umschalteinheit 32 somit eine Kommunikationsverbindung zwischen dem ersten Anschluss 14 und dem zweiten Anschluss 16 her, wobei der dritte Anschluss 18 abgeschaltet ist. Im zweiten Betriebszustand ist hingegen die Kommunikationsverbindung zwischen dem ersten Anschluss 14 und dem dritten Anschluss 18 über die Umschalteinheit 32 hergestellt, wobei der zweite Anschluss 16 deaktiviert ist. Die Umschalteinheit 32 wird natürlich für eine jeweilige Ankopplung vorgesehen, das heißt, wie in FIG 5 dargestellt, für die erste Ankopplung 52 oder die zweite Ankopplung 54. Es ist also vorzugsweise lediglich eine einzige Umschalteinheit 32 in der Kopplungseinrichtung 12 vorhanden.

FIG 6 zeigt eine schematische Darstellung wie FIG 3, bei der jedoch im Unterschied zur FIG 3 nunmehr zwei Kopplungseinrichtungen 12 vorgesehen sind. In dieser Ausgestaltung ist nämlich vorgesehen, dass auch der zweite Netzwerkzweig 22 nicht unmittelbar am Ethernet-Switch 26 angeschlossen ist, sondern über eine Kopplungseinrichtung 12, wie sie bereits zuvor erläutert wurde. Somit ist der erste Anschluss 14 dieser Kopplungseinrichtung 12 mit dem zweiten Netzwerkzweig 22 des Kommunikationsnetzwerkes 10 gekoppelt, wohingegen der zweite Anschluss 16 dieser Kopplungseinrichtung 12 wieder unmittelbar mit dem Ethernet-Switch 26 kommunikationstechnisch gekoppelt ist. Der dritte Anschluss 18 dieser Kopplungseinrichtung 12 ist wieder an die Brandmeldeeinrichtung 24 angeschlossen, jedoch diesmal nicht an die Hilfsrechnereinheit 46, sondern stattdessen an die Hauptrechnereinheit 44. Durch diese Struktur ist es möglich, bei Ausfall des Ethernet-Switch 26 eine Kommunikation sowohl mit dem ersten Netzwerkzweig 20 als auch mit dem zweiten Netzwerkzweig 22 zu realisieren. Die Zuverlässigkeit kann bei dieser Ausgestaltung gegenüber der Ausgestaltung gemäß FIG 3 also weiter erhöht werden.

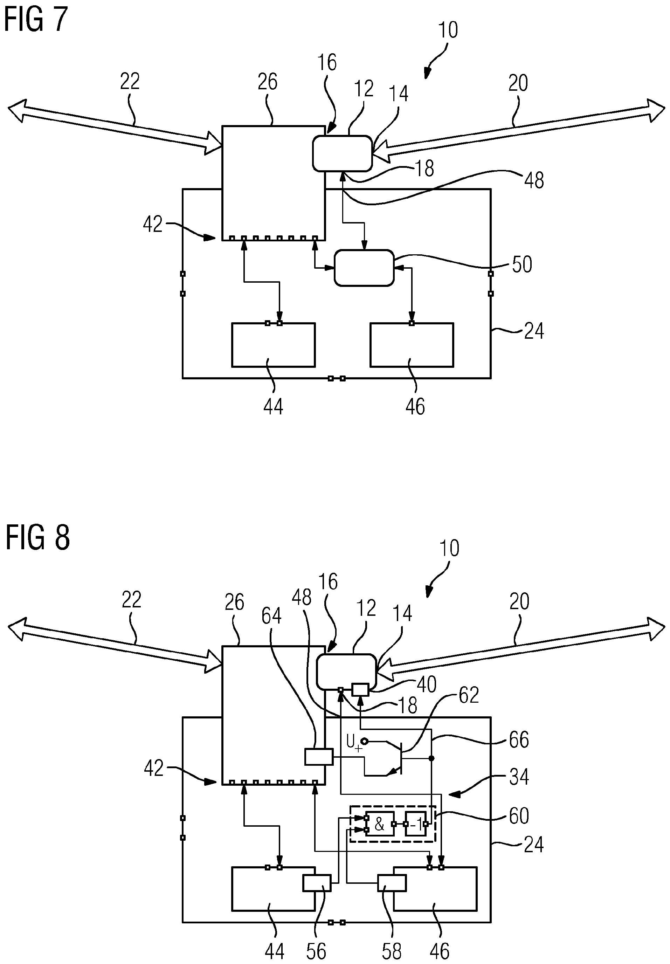

FIG 7 zeigt eine weitere Ausgestaltung, die auf der Ausgestaltung gemäß FIG 3 basiert. Bei der Ausgestaltung gemäß FIG 7 ist gegenüber der Ausgestaltung gemäß FIG 3 brandmeldeeinrichtungsseitig ergänzend eine Hilfsumschalteinheit 50 vorgesehen. Diese ist zwischen dem Netzwerkgerätanschluss 42 und der Hilfsrechnereinheit 46 kommunikationstechnisch angeschlossen und stellt eine weitere Kommunikationsverbindung zwischen dem Hilfsanschluss 48 und der Hilfsrechnereinheit 46 abhängig von einem jeweiligen Schaltzustand der Hilfsumschalteinheit 50 bereit.

In einem ungestörten Betriebszustand ist somit eine Kommunikationsverbindung von der Hilfsrechnereinheit 46 zum Netzwerkgerätanschluss 42 hergestellt. Tritt eine Störung auf, wird eine Kommunikationsverbindung mittels der Hilfsumschalteinheit 50 zwischen der Hilfsrechnereinheit 46 und dem Hilfsanschluss 48 und somit mit der Kopplungseinrichtung 12 hergestellt. Vorzugsweise kann vorgesehen sein, dass in diesem Schaltzustand die Kommunikationsverbindung zwischen der Hilfsrechnereinheit 46 und dem Netzwerkgerätanschluss 42 mittels der Hilfsumschalteinheit 50 unterbrochen beziehungsweise deaktiviert wird.

FIG 8 zeigt in einer schematischen Darstellung eine Weiterbildung der Ausgestaltung gemäß FIG 3, bei der die Brandmeldeeinrichtung 24 eine Steuereinheit 34 umfasst, mittels der an einem Steueranschluss 40 der Kopplungseinrichtung 12 ein entsprechendes Steuersignal bereitgestellt werden kann, mittels dem der gewünschte Betriebszustand der Kopplungseinrichtung 12 gesteuert werden kann. Zu diesem Zweck umfasst sowohl die Hauptrechnereinheit 44 als auch die Hilfsrechnereinheit 46 jeweils eine Fehlereinheit 56, 58, die die Funktion des Ethernet-Switch 26 hinsichtlich der Kommunikation überwacht. Die Fehlereinheiten 56, 58 stellen jeweilige Fehlersignale bereit, die einem NAND-Gatter 60 zugeführt werden. Das NAND-Gatter 60 stellt dann das Schaltsignal 66 für den Steueranschluss 40 bereit. Diese Ausgestaltung hat den Vorteil, dass ein Wechsel des Betriebszustands der Kopplungseinrichtung 12 nur dann erfolgt, wenn beide Fehlereinheiten 56, 58 einen Fehler melden.

Das Schaltsignal 66 wird vorliegend ferner dazu genutzt, über einen Transistor 62 einen Versorgungsspannungsanschluss 64 des Ethernet-Switch 26 zu schalten. Dadurch ist es möglich, bei Erfassen einer Störung des Ethernet-Switch 26 diesen durch Deaktivieren seiner Versorgungsspannung vollständig außer Betrieb zu setzen, sodass der Ethernet-Switch 26 keine weiteren Störungen, insbesondere in Bezug auf angeschlossene Geräte, insbesondere der Netzwerkzweige 20, 22, verursachen kann. Dadurch kann die Zuverlässigkeit dessen Betriebs weiter verbessert werden. Vorliegend ist der Transistor 62 durch einen bipolaren NPN-Transistor gebildet. In alternativen Ausgestaltungen kann hier natürlich auch ein beliebiges anderes Schaltelement zum Einsatz kommen, insbesondere natürlich auch ein Feldeffekttransistor oder dergleichen.

Die Erfindung erweist sich als besonders geeignet für den Einsatz bei Brandmeldesystemen, bei denen zum Beispiel ein Endgerät redundant kommunikationstechnisch angeschlossen werden soll, zum Beispiel ein Brandmeldepanel, und zwar über einen Ethernet-Switch, der als High Availability Seamless Redundancy (HSR) Switch oder auch als Parallel Redundancy Protocol (PRP) Switch ausgebildet sein kann. Derartige Technologien sind unter anderem auch durch die Normung erfasst, zum Beispiel durch die IEC 62439/3 oder dergleichen. Der Switch stellt für die Rechnereinheiten der Brandmeldeeinrichtungen eine redundante Verbindung zum Netzwerk her. Fällt der Switch selbst aus, sind beide Rechnereinheiten vom redundanten Netzwerk getrennt. Der Switch bildet somit einen Single Point of Failure. Zwar kann dieses Problem durch einen zweiten Switch reduziert werden, jedoch ergeben sich daraus hohe Kosten.

Die Erfindung schlägt deshalb vor, die Brandmeldeeinrichtung über einen Switch an eine Struktur wie einen Ethernet-Ring oder eine parallele Ethernet-Struktur anzuschließen. Die Brandmeldeeinrichtung verfügt intern über eine Degrade-CPU, die weniger leistungsfähig ist als die im Normalbetrieb genutzte Haupt-CPU. Die Degrade-CPU und die Haupt-CPU sind über den Switch an das Kommunikationsnetzwerk angeschlossen.

Erfindungsgemäß wird nun ein zweiter Port, auch Degrade-Port genannt, vorgesehen, der über die Kopplungseinrichtung, die eine Umschaltfunktion bereitstellen kann, an einem der Ring-Ports des Switches angeschlossen ist. Die Kopplungseinrichtung 12 kann zu diesem Zweck vorzugsweise einen Multiplexer beziehungsweise Demultiplexer als Umschalteinheit 32 aufweisen, der zum Beispiel durch eine integrierte Schaltung realisiert sein kann. Hierbei kann es sich um einen 16-Bit- zu 8-Bit-Multiplexer oder Demultiplexer handeln, wie er beispielsweise durch ein Bauteil S3L4892 der Firma Texas Instruments bereitgestellt wird. Dadurch kann ein (RG-) MII-Interface zwischen dem Ethernet-Ring, dem Port des Switches und dem Ethernet-Port der Degrade-CPU realisiert werden.

Als Alternativen können ferner vorgesehen sein:
- Die Ports können über einen einfachen Switch verbunden sein. Diese Lösung ist aufwendig, verursacht eine zusätzliche Verzögerung bei der Signallaufzeit. Hier sollte sichergestellt werden, dass die jeweils nicht aktive Komponente, beispielsweise der Switch oder der Degrade-Port, die Kommunikation nicht stört.
- Beispielsweise können für 100 Mbit-Ethernet Tx- und Rx-Adernpaare ohne weitere elektrische Trennung an den Port angeschlossen werden. Auch hier sollte die jeweils nicht aktive Komponente deaktiviert werden.
- Ein PHY kann MII-seitig direkt an das MII-Interface der Degrade-CPU und einen Port des Switches angeschlossen sein. Auch hier sollte die jeweils nicht aktive Komponente deaktiviert sein.

Durch eine Überwachungslogik wie beispielsweise die Fehlereinheiten 56, 58 in Verbindung mit der Steuereinheit 34, beispielsweise unter Nutzung einer gemeinsamen Entscheidung beider Rechnereinheiten beziehungsweise CPUs oder einem Watchdog, der die Kommunikation am Switch überwacht, kann erreicht werden, dass der Degrade-Port 48 deaktiviert beziehungsweise vom Kommunikationsnetzwerk 10 getrennt bleibt, solange der Switch aktiv ist. Dies ist vorteilhaft, weil beim Switched Ethernet in der Regel nur zwei Ports an einem Link angeschlossen werden können. Erst, wenn der Switch 26 gestört beziehungsweise ausgefallen ist, wird der Degrade-Port 48 aktiviert beziehungsweise mit dem Kommunikationsnetzwerk 10 verbunden.

Damit kann erreicht werden, dass die Switched-Ethernet-Kommunikationsmechanismen nach Möglichkeit nicht gestört werden. Falls der Switch 26 ausfällt, ist bei einer Ring-Topologie der Ringschluss unterbrochen und die Haupt-CPU 44 vom Kommunikationsnetzwerk 10 abgetrennt. Die Degrade-CPU 46 kann aber über den Degrade-Port 48 noch Meldungen über den verbleibenden Kommunikationspfad absetzen. Wenn die Haupt- oder Degrade-CPU erkennen, dass der Switch 26 defekt ist beziehungsweise gestört ist, zum Beispiel indem sie den Datenverkehr überwachen und/oder länger als eine vorgegebene Toleranzzeit von beiden Seiten des Kommunikationsnetzwerkes 10 keine Daten empfangen, setzen sie ein entsprechendes Fehlersignal. Nur wenn beide CPUs 44, 46 dieses Signal setzen, wird die Kopplungseinrichtung 12 hinsichtlich des Betriebszustands umgeschaltet und vorzugsweise der Switch 26 deaktiviert, indem beispielsweise seine Versorgungsspannung abgeschaltet wird. Hierdurch kann erreicht werden, dass der Switch 26 nicht als fehlerhaft erkannt wird, wenn eine der CPUs 44, 46 beziehungsweise deren Kommunikationsanbindung defekt ist.

Alternativ kann die Haupt-CPU 44 anstelle der Degrade-CPU 46 oder zusätzlich zur Degrade-CPU und den anderen Teil des Netzwerkes angeschlossen werden, sodass alternativ oder zusätzlich die Haupt-CPU 44 auch noch kommunizieren kann.

Weiterhin kann eine zweite Umschaltkomponente 50 vorgesehen sein, die abhängig von einer jeweiligen Betriebssituation die Degrade-CPU 46 mit der Kopplungseinrichtung 12 oder dem Switch 26 kommunikationstechnisch koppelt.

Erfindungsgemäß wird eine redundante Anschaltung eines redundanten Kommunikationsendgerätes 24 an ein redundantes Ethernet-Netzwerk 10 ermöglicht, ohne dass ein aufwendiger, teurer Ethernet-Switch 26 redundant ausgeführt werden müsste. Eine Unterbrechung des in Ring-Topologie ausgebildeten Kommunikationsnetzwerks 10 kann damit bei einer Störung des Switches 26 zwar nicht vermieden werden, jedoch kann die Wahrscheinlichkeit der Ringunterbrechung gegenüber dem Stand der Technik reduziert werden, weil keine zusätzlichen Switches 26 in den Ring eingeführt zu werden brauchen. Dadurch kann eine kostengünstige redundante kommunikationstechnische Kopplung erreicht werden.

Die Erfindung erlaubt es ferner, eine Vielzahl von Ethernet-Protokollen, wie zum Beispiel Neighbour Discovery, Auto-Negotiation und/oder dergleichen nahezu unverändert weiter zu nutzen.

Die in den Figuren dargestellten Ausführungsbeispiele dienen ausschließlich der Erläuterung der Erfindung und sollen diese nicht beschränken.

## Patentansprüche

1. Kopplungseinrichtung (12) für ein Kommunikationsnetzwerk (10), mit
- einem ersten Anschluss (14) zum Anschließen an einen ersten Netzwerkzweig (20) des Kommunikationsnetzwerks (10),
- einem zweiten Anschluss (16) zum Anschließen an ein mit einem zweiten Netzwerkzweig (22) des Kommunikationsnetzwerkes (10) und einem Kommunikationsendgerät (24) kommunikationstechnisch koppelbaren Netzwerkgerät (26), welches Netzwerkgerät (26) zum kommunikationstechnischen Koppeln des zweiten Anschlusses (16), des zweiten Netzwerkzweigs (22) und des Kommunikationsendgeräts (24) dient,
**gekennzeichnet durch**
- einen dritten Anschluss (18) zum unmittelbaren Anschließen an das Kommunikationsendgerät (24),
- wobei die Kopplungseinrichtung (12) ausgebildet ist, in einem ersten Betriebszustand eine kommunikationstechnische Kopplung zwischen dem ersten und dem zweiten Anschluss (14, 16) und in einem zweiten Betriebszustand eine kommunikationstechnische Kopplung zwischen dem ersten und dem dritten Anschluss (14, 18) herzustellen.

2. Kopplungseinrichtung nach Anspruch 1, **dadurch gekennzeichnet, dass** die Kopplungseinrichtung (12) ausgebildet ist, die kommunikationstechnische Kopplung zwischen dem ersten und dem zweiten Anschluss (14, 16) im zweiten Betriebszustand zu deaktivieren.

3. Kopplungseinrichtung nach einem der vorhergehenden Ansprüche, **dadurch gekennzeichnet, dass** die Kopplungseinrichtung (12) ausgebildet ist, die kommunikationstechnische Kopplung zwischen dem ersten und dem dritten Anschluss (14, 18) im ersten Betriebszustand zu deaktivieren.

4. Kopplungseinrichtung nach einem der vorhergehenden Ansprüche, **gekennzeichnet durch** eine Umschalteinheit (32) wenigstens zum Bereitstellen des ersten und des zweiten Betriebszustands, wobei die Umschalteinheit (32) wenigstens mit dem ersten, dem zweiten und dem dritten Anschluss (14, 16, 18) kommunikationstechnisch gekoppelt ist.

5. Kopplungseinrichtung nach Anspruch 4, **gekennzeichnet durch** eine Steuereinheit (34) zumindest zum Steuern der Umschalteinheit (32).

6. Kopplungseinrichtung nach einem der vorhergehenden Ansprüche, **gekennzeichnet durch** eine mit dem ersten Anschluss (14) kommunikationstechnisch gekoppelte induktive Einheit (28), und eine mit der induktiven Einheit (28) und mit dem zweiten Anschluss (16) kommunikationstechnisch gekoppelte Schnittstellenschaltung (30) zum Kodieren und Dekodieren von Daten und/oder zum Modulieren und Demodulieren von Signalen, um unter Zusammenwirkung mit der induktiven Einheit (28) eine physikalische Schnittstelle am ersten Anschluss (14) bereitzustellen.

7. Kopplungseinrichtung nach einem der Ansprüche 4 bis 6, **dadurch gekennzeichnet, dass** die Umschalteinheit (32) zwischen dem ersten Anschluss (14) und der induktiven Einheit (28) angeschlossen ist, wobei zwischen der Umschalteinheit (32) und dem dritten Anschluss (18) eine induktive Hilfseinheit (36) und eine Schnittstellenhilfsschaltung (38) angeschlossen sind.

8. Kopplungseinrichtung nach einem der Ansprüche 4 bis 6, **dadurch gekennzeichnet, dass** die Umschalteinheit (32) zwischen der induktiven Einheit (28) und der Schnittstellenschaltung (30) anschlossen ist, wobei zwischen der Umschalteinheit (32) und dem dritten Anschluss (18) die Schnittstellenhilfsschaltung (38) angeschlossen ist.

9. Kopplungseinrichtung nach einem der Ansprüche 4 bis 6, **dadurch gekennzeichnet, dass** die Umschalteinheit (32) zwischen der Schnittstellenschaltung (30) und dem zweiten Anschluss (16) und ferner unmittelbar am dritten Anschluss (18) angeschlossen ist.

10. Kommunikationsnetzwerk (10) mit
- einem ersten Netzwerkzweig (20),
- einem zweiten Netzwerkzweig (22),
- wenigstens einem mit einem Kommunikationsendgerät (24) kommunikationstechnisch koppelbaren und mit dem ersten und dem zweiten Netzwerkzweig (20, 22) gekoppelten Netzwerkgerät (26), welches Netzwerkgerät (26) zum kommunikationstechnischen Koppeln des ersten und des zweiten Netzwerkzweigs (20, 22) und des Kommunikationsendgeräts (24) dient, **gekennzeichnet durch**
- wenigstens eine Kopplungseinrichtung (12) nach einem der vorhergehenden Ansprüche, wobei die wenigstens eine Kopplungseinrichtung (12) zwischen einem jeweiligen der Netzwerkzweige (20, 22) und dem Netzwerkgerät (26) angeschlossen ist.

11. Kommunikationsendgerät (24) zum kommunikationstechnischen Koppeln mit einem Kommunikationsnetzwerk (10) mittels eines mit einem Kommunikationsnetzwerk (10) kommunikationstechnisch koppelbaren Netzwerkgeräts (26), mit
- einem Netzwerkgerätanschluss (42) zum Koppeln mit dem Netzwerkgerät (26),
- einer ersten Verarbeitungseinheit (44), und
- einer zweiten Verarbeitungseinheit (46) zum Realisieren einer redundanten Funktion des Kommunikationsendgeräts (24),
- wobei zumindest die erste Verarbeitungseinheit (44) mit dem Netzwerkgerätanschluss (42) kommunikationstechnisch gekoppelt ist,
**gekennzeichnet durch**
- einen Hilfsanschluss (48) zum Anschließen an eine Kopplungseinrichtung (12) nach einem der Ansprüche 1 bis 9,
- wobei zumindest die zweite Verarbeitungseinheit (46) am Hilfsanschluss (48) angeschlossen ist.

12. Kommunikationsendgerät nach Anspruch 11, **dadurch gekennzeichnet, dass** das Kommunikationsendgerät (24) ausgebildet ist, eine Kommunikation des Netzwerkgeräts (26) zumindest mittels der zweiten Verarbeitungseinheit (46) zu ermitteln und abhängig von der ermittelten Kommunikation ein Umschaltsignal für die Kopplungseinrichtung (12) bereitzustellen.

13. Kommunikationsendgerät nach Anspruch 12, **dadurch gekennzeichnet, dass** das Kommunikationsendgerät (24) ausgebildet ist, eine Kommunikation des Netzwerkgeräts (26) mittels der ersten und der zweiten Verarbeitungseinheit (44, 46) zu ermitteln und abhängig von der ermittelten Kommunikation das Umschaltsignal für die Kopplungseinrichtung (12) bereitzustellen.

14. Kommunikationsendgerät nach einem der Ansprüche 11 bis 13, **dadurch gekennzeichnet, dass** das Kommunikationsendgerät (24) das Netzwerkgerät (26) zumindest teilweise umfasst.

15. Brandmeldesystem mit
- einer Mehrzahl von als Kommunikationsendgeräten (24) ausgebildeten Brandmeldeeinrichtungen,
- einer Brandmeldezentrale, und
- einem Kommunikationsnetzwerk (10) zum kommunikationstechnischen Koppeln der Brandmeldeeinrichtungen mit der Brandmeldezentrale,
**dadurch gekennzeichnet, dass**
das Kommunikationsnetzwerk (10) gemäß Anspruch 10 ausgebildet ist und die Kommunikationsendgeräte (24) nach einem der Ansprüche 11 bis 14 ausgebildet sind.
